# EUROPEAN PATENT SPECIFICATION

(11) **EP 0 513 842 B1**
(45) Date of publication and mention of the grant of the patent: **20.11.1996**
(21) Application number: 92108363.0
(22) Date of filing: 18.05.1992
(51) Int. Cl.: H05B 6/68, F24C 7/08

(54) **Power supply apparatus for magnetron driving**
Stromversorgungsapparat für das Antreiben eines Magnetrons
Appareil d'alimentation en courant pour l'entraînement d'un magnétron

(30) Priority: 16.05.1991 KR 798491
(43) Date of publication of application: 19.11.1992
(73) Proprietor: SAMSUNG ELECTRONICS CO., LTD., Suwon-City, Kyounggi-Do 441-370 (KR)
(72) Inventor: Kyong-Keun, Lee, Suwon-shi, Kyonggi-do (KR)
(74) Representative: WILHELMS, KILIAN & PARTNER Patentanwälte

(56) References cited:
- GB-A- 2 215 872
- US-A- 4 992 637
- PATENT ABSTRACTS OF JAPAN, unexamined applications, M section, vol. 2, no. 63, May 13, 1978 THE PATENT OFFICE JAPANESE GOVERNMENT,page 1041 M 78
- Patent Abstracts of Japan, vol. 10, no. 376 (E-464) representing JP-A-61 170 103

## Description

### BACKGROUND OF THE INVENTION

### FIELD OF THE INVENTION

The present invention relates to a power supply apparatus for magnetron driving in a micro-wave oven, and more particularly to a power supply apparatus for driving a magnetron in the micro-wave oven wherein damages wrought on magnetrons by the overcurrent can be prevented by applying stable currents to a power supply apparatus for driving a magnetron which employs S.M.P.S. ( Switching Mode Power supply ) system.

### DESCRIPTION OF THE PRIOR ART

Generally, high voltages are needed to drive a magnetron of a micro-wave oven and high-voltage transformers or inverters are used for generating high voltages.

Power supply apparatus for magnetron driving employing an inverter was described in Japenese laid open patent application NO. 53-27143, entitled "the power supply apparatus for driving magnetron".

According to Japanese laid open patent application NO. 53-27143, the power supply apparatus, for driving magnetron is composed of a frequency oscillation circuit which can change duty cycles of output signals, a high frequency oscillation circuit which controls signal transfer or signal oscillation according to output signals from frequency oscillati-on circuit and a switching circuit being switched according to the signals from high frequency oscillation ciruits, which thus realizes miniaturization, lightening and cost-down of the output transformer.

However, this kind of inverter-type power supply apparatus for magnetron driving has disadvantages of unstable ouptut voltages aganist the load and voltage changes, thus causing damages on the magnetron, and in case high voltage transformer is used, power supply apparatus tends to become bulky and heavy as it generates high voltages.

A power supply apparatus for magnetron driving with the features of the preamble of the patent claim 1 is known from the US-A-4 992 637. With this known apparatus the feedback circuit generates a feedback signal on the basis of an electric power value calculated from the secondary current detected by a current probe and from the secondary voltage detected by a voltage probe. The switching means consists of a switching transistor and a retrace diode connected in parallel with a resonant capacitor to generate a resonant waveform.

Accordingly, it is an object of the present invention to provide a power supply apparatus for driving magnetron which can supply stable electric power to prevent damages on the magnetron by overcurrents, and at the same time to provide a miniaturized power supply apparatus as well.

### SUMMARY OF THE INVENTION

The present invention relates to a power supply apparatus for magnetron driving comprising:
first rectifying means which transform an alternating current into a direct current,
a first transformer which generates a sine-wave voltage to the secondary winding by way of switching operation when the direct current which is output from said first rectifying means is input,
a first feedback means, which feedback a voltage from the first transformer,
a second rectifying means, which rectifies a voltage produced from the transformer and then supplies the voltage to the magnetron,
a current detecting means, which generates a signal in accordance with the current applied to the magnetron,
a second feedback means which feedback the signal from the current detecting means,
a pulse width modulation control means, which outputs switching control pulses for controlling voltages in response to the feedback voltage from the first feedback means and the signal from the second feedback means, and
a switching means which controls the voltage applied to the magnetron by switching the direct current to the first transformer in accordance with a switching control pulses from said pulse width modulation control means,
characterized in that
- the first feedback means feedback a voltage from a second winding on the primary side of the first transformer,
- the current detecting means is formed by a second current detecting transformer, which provides a voltage,
- the outputs of the first and second feedback means are connected to each other and to the input of the pulse width modulation control means and
- the relative magnitudes of the feedback voltages are such that, if the voltage supplied to the magnetron is below a pretermined value, stabilized voltages are obtained by the feedback voltage from the first feedback means and that, if the voltage supplied to the magnetron is increased over that predetermined value the feedback voltage from the second feedback means controls the voltage supplied to the magnetron to prevent overcurrents in the magnetron.

### BRIEF DESCRIPTION OF THE DRAWINGS

For better understanding of the nature and objects of the invention, reference should be made to the following detailed description taken in connection with the accompanying drawings in which:
Fig.1 is a circuit diagram of power supply apparatus for magnetron driving in accordance with the present invention;
Fig.2 is a current characteristics diagram for the magnetron voltages as used in the apparatus of Fig.1;
Fig.3 is a feedback voltage characteristics diagram as used in the apparatus of Fig.1.

### DETAILED DESCRIPTION OF THE INVENTION

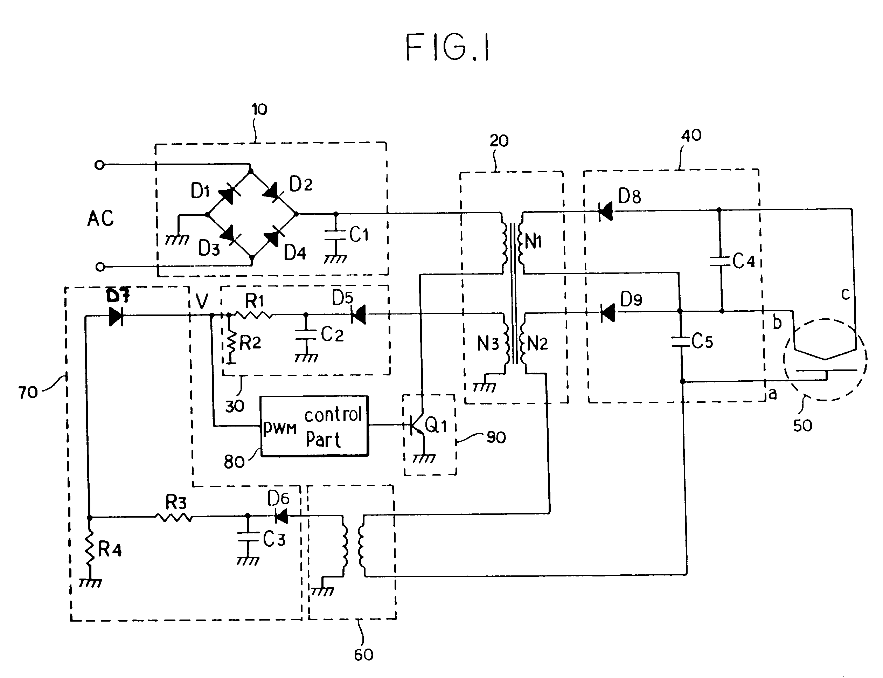

Fig.1 is a circuit drawing of power supply apparatus for magnetron driving according to the present invention, comprising:
a first rectifying means 10 which transforms alternation currents to direct currents;
a first transformer 20 which generates sine wave voltages to the secondary by switching operation once direct current which is the output of said first rectifying means 10 is inputted;
a first feedback means 30 which feeds back voltages generated from said transformer 20;
a second rectifying means 40 which rectifies voltages generated from the transformer 20 and then supplies the voltages to the Magnetron 50;
a current detecting transformer 60 which generates voltages according to the currents applied to the magnetron 50;
a second feedback means 70 which divides voltages generated by said current detecting transformer 60 and then feedbacks;
P W M control means 80 which outputs switching control pulses for control of voltages according to the feedback voltages of said feedback means 30, 70;
a switching means 90 which controls voltages applied to the magnetron 50 through the switching operation of the transformer 20 according to the switching control pulses of said P W M control means 80.

Among the above constructions, the first rectifying means 10 is composed of diodes D1-D4 and a capacitor C1, the second rectifying means 40 is composed of diodes D8, D8 and capacitors C4, C5,and the second feedback means 70 consists of diodes D6, D7, resistors R3, R4 and a capacitor C3.

More details regarding a power supply apparatus for magnetron driving in preferred embodiment according to the present invention can be explained as follows.

In Fig.1, when alternating currents (AC)are inputted to the first rectifying means 10, full-wave rectification is effected by bridge-type, rectifying diodes D1-D4.

The curents full-wave rectified at said bridge-type rectifying diodes D1-D4 are charged into a capacitor C1 and inputted onto a transformer 20, and by the switching pulses of P W M control means 80, the switching means 90 performs switching operations, causing voltages to be excited to coils N1-N3.

The voltages excited to the coils N1, N2 of transformer 20 are half-wave rectified at the second rectifying means 40 and then are supplied to the magnetron 50 for the magnetron to be driven, thereby electromagnetic waves are generated at the magnetron 50.

At the moment, direct voltages of 3.7-4.1 kV are supplied to terminals a-b of magnetron 50 while heater voltages of 2-3 V are supplied to terminals b-c.

Meanwhile, at P W M control part 80, the feedback value V f of output voltage, i.e., the voltage excited to the coil N3 of transformer 20, is half-wave rectified at a diode D5 of the first feedback means 30 and then is charged in a condenser C2, and according to voltages V_{f} divided by resistors R1, R2, as on-off time of switching means 90 is controlled, the duty ratio of voltages applied to the primary of the transformer 20 is controlled, causing output voltages to be stabilized.

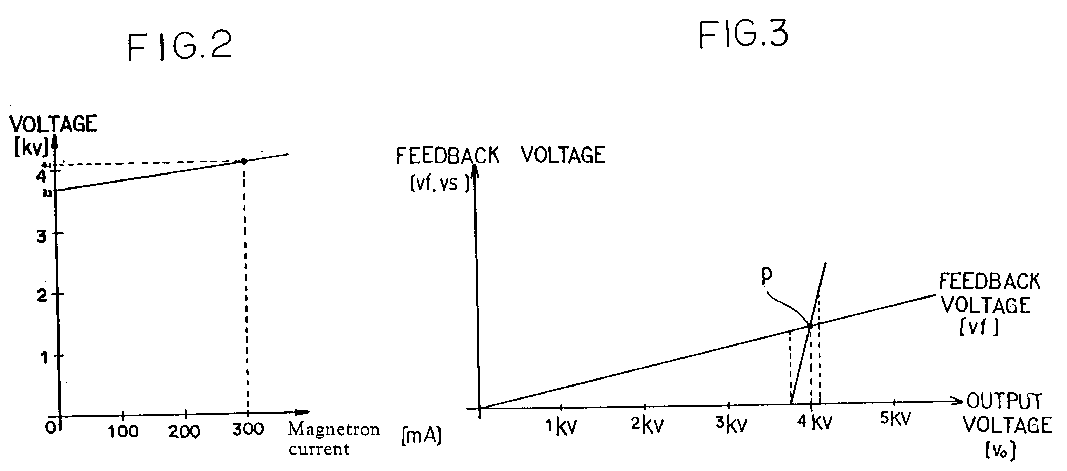

However, the magnetron M1, as illustrated in Fig.2, operates under unloading of zero current with the voltage of 3.7 1 kV and within 3.7 kV-4.1 kV which is operational range of the magnetron 50, the current drops abruptly to 0 mA-300 mA.

Accordingly, in the process of stabilizing output voltage by way of feedback value V f, the current changes abruptly (0mA-300 mA) within narrow voltage ranges (3.7 kV-4.1 kV) where the magnetron 50 is operated, causing output voltage to be unstable.

Consequently, if the voltage generated from the magnetron 50 increases to more than 3.7 kV and if the current is applied to the current detecting transformer 60 as the current increases,the voltage generated from the secondary of the transformer 60 is half-wave rectified by the diode D6 of feedback means 70 and then is charged into a capacitor C3, then divided by resistors R3, R4 and finally is supplied to P W M control part 80 through a diode D7, thereby controls the pulse width of P W M control part 80, which consequently controls switching cycle and stabilizes the voltages supplied to the magnetron 50.

In other words, as seen in Fig.3 of output voltage characteristics diagram, stabilized voltages are obtained by the feedback voltage Vf excited to a coil N3 of the transformer 20 under the output voltage of less than "P" point while, if the output voltage Vo is increased to over "P" point, the switching cycles is controlled to prevent overcurrent flow by the feedback voltage Vs of the output voltage Vo.

However, if the voltage applied to the magnetron 50 is less then 3.7 kV, the diode D 7 of the second feedback means 70 is designed to prevent backward currents caused by first feedback means 30.

Therefore, the power supply apparatus for magnetron driving in accordance with the present invention, as mentioned in the above, is that the power is so supplied to the magnetron by way of S M P S system that the magnetron will be protected from the overcurrents and furthermore the weight and magnitude of the power supply apparatus can be reduced.

As explained in the detailed description of the invention, the invention is not restricted to the above examples. In practice many variations are possible to those skilled in the art without departing from the scope of this invention, and more particularly, the current detecting transformer can be conventionally replaced by other current detecting means, which accordingly can provide lots of variations for the second feedback means.

## Claims

1. A power supply apparatus for magnetron (50) driving comprising:
- first rectifying means (10) which transform an alternating current into a direct current,
- a first transformer (20), which generates a sine-wave voltage to the secondary winding by way of switching operation when the direct current, which is output from said first rectifying means (10) is input,
- a first feedback means (30), which feedback a voltage from the first transformer (20),
- a second rectifying means (40), which rectifies a voltage produced from the transformer (20) and then supplies said voltage to the magnetron (50),
- a current detecting means (60), which generates a signal in accordance with the current applied to the magnetron (50),
- a second feedback means (70), which feedback the signal from the current detecting means (70),
- a pulse width modulation control means (80), which outputs switching control pulses for controlling voltages in response to the feedback voltage from the first feedback means (30) and the signal from the second feedback means (70), and
- a switching means (90) which controls the voltage applied to the magnetron (50) by switching the direct current to the first transformer (20) in accordance with the switching control pulses from said pulse width modulation control means (80) ,
characterized in that
- the first feedback means (30) feedback a voltage from a second winding on the primary side of the first transformer (20),
- the current detecting means (60) is formed by a second current detecting transformer, which provides a voltage,
- the outputs of the first and second feedback means (30, 70) are connected to each other and to the input of the pulse width modulation control means (80) and
- the relative magnitudes of the feedback voltages are such that, if the voltage supplied to the magnetron (50) is below a pretermined value, stabilized voltages are obtained by the feedback voltage from the first feedback means (30) and that, if the voltage supplied to the magnetron (50) is increased over that predetermined value the feedback voltage from the second feedback means (70) controls the voltage supplied to the magnetron (50) to prevent overcurrents in the magnetron (50).

## Patentansprüche

1. Energieversorgungsvorrichtung zum Betreiben eines Magnetrons (50) mit:
- einer ersten Gleichrichteinrichtung (10), die einen Wechselstrom in einen Gleichstrom umwandelt,
- einem ersten Transformator (20), der eine sinuswellenförmige Spannung an der Sekundärwicklung über einen Schaltvorgang erzeugt, wenn der Gleichstrom, der von der ersten Gleichrichteinrichtung (10) ausgegeben wird, eingegeben wird,
- einer ersten Rückkoppeleinrichtung (30), die eine Spannung vom ersten Transformator (20) rückkoppelt,
- einer zweiten Gleichrichteinrichtung (40), die eine vom Transformator (20) erzeugte Spannung gleichrichtet und dann diese Spannung dem Magnetron (50) liefert,
- einer Stromerfassungseinrichtung (60), die ein Signal nach Maßgabe des Stromes liefert, der am Magnetron (50) liegt,
- einer zweiten Rückkoppeleinrichtung (70), die das Signal von der Stromerfassungseinrichtung (70) rückkoppelt,
- einer Pulsbreitenmodulationssteuereinrichtung (80), die Schaltsteuerimpulse zum Steuern der Spannungen auf die Rückkopplungsspannung von der ersten Rückkoppeleinrichtung (30) und das Signal von der zweiten Rückkoppeleinrichtung (70) ansprechend ausgibt, und
- einer Schalteinrichtung (90), die die am Magnetron (50) liegende Spannung dadurch steuert, daß sie den Gleichstrom zum ersten Transformator (20) nach Maßgabe der Schaltsteuerimpulse von der Pulsbreitenmodulationssteuereinrichtung (80) steuert, dadurch gekennzeichnet, daß
- die erste Rückkoppeleinrichtung (30) eine Spannung von einer zweiten Wicklung auf der Primärseite des ersten Transformators (20) rückkoppelt,
- die Stromerfassungseinrichtung (60) von einem zweiten Stromerfassungstransformator gebildet ist, der eine Spannung liefert,
- die Ausgänge der ersten und der zweiten Rückkoppeleinrichtung (30, 70) miteinander und mit dem Eingang der Pulsbreitenmodulationssteuereinrichtung (80) verbunden sind, und
- die relativen Amplituden der Rückkopplungsspannungen derart sind, daß dann, wenn die dem Magnetron (50) gelieferte Spannung unter einem bestimmten Wert liegt, stabilisierte Spannungen durch die Rückkopplungsspannung von der ersten Rückkoppeleinrichtung (30) erhalten werden, und dann, wenn die dem Magnetron (50) gelieferte Spannung über den bestimmten Wert ansteigt, die Rückkopplungsspannung von der zweiten Rückkoppeleinrichtung (70) die dem Magnetron (50) gelieferte Spannung steuert, um Überströme im Magnetron (50) zu verhindern.

## Revendications

1. Appareil d'alimentation en courant pour l'entraînement d'un magnétron (50) comprenant :
- des premiers moyens redresseurs (10) qui transforment un courant alternatif en courant continu,
- un premier transformateur (20), qui génère une tension sinusoïdale à l'enroulement secondaire au moyen d'une opération de commutation lorsque le courant continu, qui est délivré depuis lesdits premiers moyens redresseurs (10), est entré,
- des premiers moyens de rétroaction (30), qui renvoient une tension depuis le premier transformateur (20),
- des seconds moyens redresseurs (40), qui redressent une tension produite par le transformateur (20) et amènent ensuite ladite tension jusqu'au magnétron (50),
- des moyens de détection du courant (60), qui génèrent un signal conformément au courant appliqué au magnétron (50),
- des seconds moyens de rétroaction (70), qui renvoient le signal venant des moyens de détection du courant (70),
- des moyens de commande (80) de modulation de largeur d'impulsion, qui délivrent des impulsions de commande de commutation pour contrôler des tensions en réponse à la tension de rétroaction depuis les premiers moyens de rétroaction (30) et le signal venant des seconds moyens de rétroaction (70), et
- des moyens de commutation (90) qui commandent la tension appliquée au magnétron (50) en commutant le courant continu sur le premier transformateur (20) conformément aux impulsions de commande de commutation venant desdits moyens de commande (80) de modulation de largeur d'impulsion,
- les premiers moyens de rétroaction (30) renvoient une tension d'un second enroulement sur le côté principal du premier transformateur (20),
- les moyens de détection du courant (60) sont formés par un second transformateur de détection de courant, qui fournit une tension,
- les sorties des premiers et seconds moyens de rétroaction (30, 70) sont reliées l'une à l'autre et à l'entrée des moyens de commande (80) de modulation de largeur d'impulsion et
- les amplitudes relatives des tensions de rétroaction sont telles que, si la tension appliquée au magnétron (50) est au-dessous d'une valeur prédéterminée, des tensions stabilisées sont obtenues par la tension venant des premiers moyens de rétroaction (30) et telles que, si la tension appliquée au magnétron (50) dépasse cette valeur prédéterminée, la tension de rétroaction venant des seconds moyens de rétroaction (70) contrôle la tension appliquée au magnétron (50) pour empêcher les surintensités dans le magnétron (50).
